# FASCICULE DE BREVET EUROPEEN

(11) **EP 4 227 185 B1**
(45) Date de publication et mention de la délivrance du brevet: **10.09.2025**
(21) Numéro de dépôt: 23156086.3
(22) Date de dépôt: 10.02.2023
(51) Int. Cl.: B61C 9/48, F16D 27/04, F16D 27/09

(54) **ENSEMBLE D'ENTRAÎNEMENT ET VÉHICULE ASSOCIÉ**
ANTRIEBSANORDNUNG UND FAHRZEUG DAMIT
DRIVE ASSEMBLY AND VEHICLE

(30) Priorité: 14.02.2022 FR 2201265
(43) Date de publication de la demande: 16.08.2023
(73) Titulaire: ALSTOM Holdings, 93400 Saint-Ouen-sur-Seine (FR)
(72) Inventeur: OLDRINI, Riccardo, 75116 PARIS (FR); DUBOIS, Philippe, 25620 TREPOT (FR); SCHERER, Michel, 25320 GRANDFONTAINE (FR)
(74) Mandataire: Plasseraud IP

(56) Documents cités:
- DE-A1- 102010 040 491
- DE-A1- 19 958 445
- JP-A- 2005 061 438
- US-A- 4 278 028
- US-B2- 6 975 055

## Description

La présente invention concerne un ensemble d'entrainement d'un dispositif tournant.

L'invention concerne également un véhicule, notamment un véhicule ferroviaire, comprenant au moins un tel ensemble.

Il est connu d'utiliser de tels ensembles d'entrainement pour entrainer en rotation des dispositifs tournants grâce au couple moteur fourni par le moteur électrique. En particulier, ces ensembles d'entraînement sont utilisés pour entraîner les roues d'un véhicule, notamment d'un véhicule ferroviaire, à propulsion électrique ou mixte.

Le couple moteur est généré par une interaction électromagnétique entre un stator monté fixe sur le carter et un rotor monté sur l'arbre. De manière connue, le champ électromagnétique met le rotor en mouvement dans le moteur et le couple est transmis par l'arbre.

Le document JP 2005 061438 A divulgue un ensemble d'entrainement ayant un actionneur electromagnétique.

Parmi les différents types de moteurs électriques, les moteurs à aimants permanents, ou machines synchrones à aimant permanents, sont avantageux en ce qu'ils peuvent accepter des courants de surcharge importants pour démarrer rapidement, et en ce qu'ils présentent une forte compacité qui permet une économie d'espace importante.

Cependant, un moteur à aimant permanent peut présenter des risques d'utilisation lorsqu'il entraîne un dispositif tournant présentant une forte inertie. En effet, même une fois que la génération de champs électrique dans le moteur a été stoppée, l'inertie du véhicule maintient la rotation des roues, qui entrainent alors l'arbre en rotation dans le stator. Le moteur peut alors se comporter comme un générateur, et l'interaction entre rotor et stator pour être la cause de surtension pouvant endommager le moteur.

A cet effet, il est souhaitable de munir les moteurs d'un dispositif de couplage et de découplage entre l'arbre et le dispositif tournant, ou embrayage, afin d'éviter les retours de couple vers le moteur. Un tel dispositif permet notamment d'interrompre la transmission de couple entre l'arbre et le dispositif tournant, à distance, pour protéger la machine.

Cependant, ces dispositifs peuvent encore être améliorés. En effet, l'ajout du dispositif d'embrayage augmente l'encombrement associé au système d'entrainement. De plus, le dispositif d'embrayage pilotable à distance est relativement complexe et fragile, et son endommagement rend le système d'entraînement inopérant.

Un but de l'invention est donc de fournir un système d'entrainement permettant de désaccoupler l'arbre du dispositif tournant à distance, présentant une construction simple lui conférant une bonne résistance et un encombrement réduit.

A cet effet, l'invention a pour objet un ensemble d'entrainement d'un dispositif tournant selon la revendication 1.

Un tel ensemble d'entraînement permet une intégration améliorée du système d'accouplement, améliorant la robustesse et la compacité du système d'entraînement.

Selon des modes de réalisation particuliers, l'ensemble selon l'invention présente l'une ou plusieurs des caractéristiques suivantes, prise(s) isolément ou selon toute combinaison techniquement réalisable :
- le système d'actionnement comprend un organe d'engagement propre à solliciter le deuxième plateau vers sa position d'engagement lorsqu'il est activé, notamment sur commande externe ;
- l'organe d'engagement comprend un solénoïde agencé pour générer un champ électrique et/ou magnétique lorsqu'il est activé, le champ électrique et/ou magnétique exerçant une force d'engagement sur le deuxième plateau sollicitant le deuxième plateau vers sa position d'engagement ;
- le premier plateau et le deuxième plateau comprennent respectivement un premier organe d'embrayage et un deuxième organe d'embrayage s'étendant en regard l'un de l'autre, agencés pour coopérer l'un avec l'autre lorsque le deuxième plateau est en position d'engagement ;
- le premier plateau et le deuxième plateau sont agencés pour coopérer l'un avec l'autre par friction lorsque le deuxième plateau est en position d'engagement ;
- le manchon comprend une surface externe périphérique comportant des cannelures externes réparties autour de l'axe, le deuxième plateau étant monté sur les cannelures externes de manière mobile en translation selon une direction parallèle à l'axe; et
- l'ensemble d'entraînement comprend un capot de protection sensiblement cylindrique monté sur le carter, le capot faisant saillie sensiblement parallèlement à l'axe depuis des bords d'extrémités du logement.

Selon un autre aspect, l'invention a également pour objet un véhicule notamment ferroviaire, comprenant un ensemble d'entrainement du type précité, ainsi qu'un dispositif tournant, le manchon étant fixé au dispositif tournant.

Selon des modes de réalisation particuliers, le véhicule selon l'invention présente la caractéristique suivante :
- le dispositif tournant comprend au moins une roue du véhicule, l'ensemble d'entraînement comprenant avantageusement un réducteur comprenant le manchon.

L'invention sera mieux comprise à la lecture de la description qui suit, donnée uniquement à titre d'exemple non-limitatif et faite en référence aux dessins annexés, parmi lesquels :
- [Fig 1] la figure 1 est une vue schématique partielle d'un véhicule ferroviaire comprenant un ensemble d'entraînement selon l'invention,
- [Fig 2] la figure 2 est une vue en coupe schématique partielle de l'ensemble d'entraînement de la figure 1, dans une configuration accouplée, et
- [Fig 3] la figure 3 est une vue en coupe schématique partielle de l'ensemble d'entraînement des figures 1 et 2 dans une configuration désaccouplée.

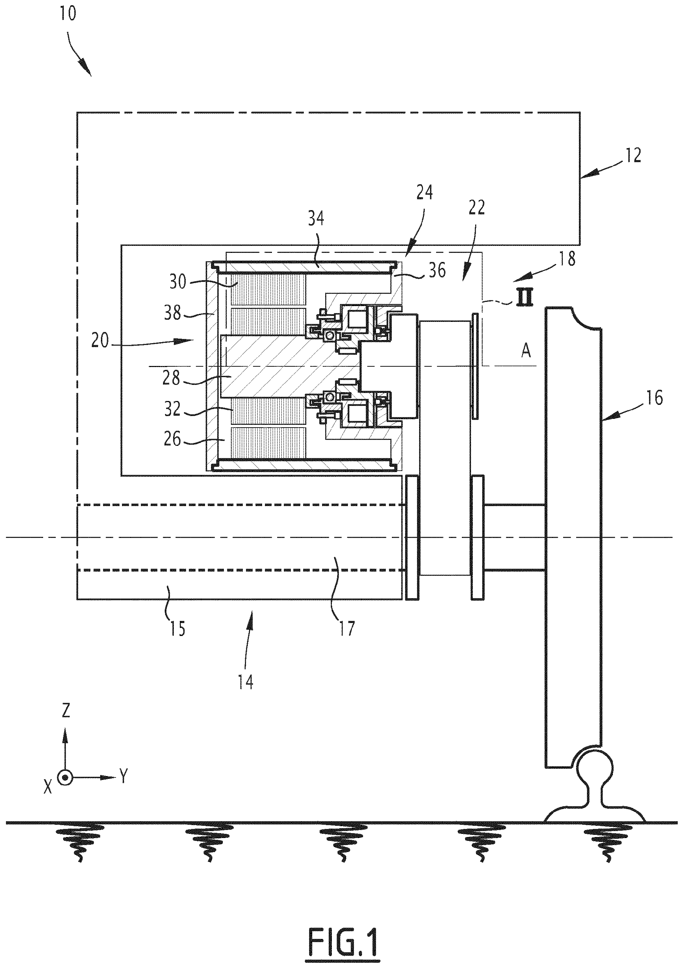

Un véhicule 10 est partiellement représenté sur la figure 1. Le véhicule 10 est par exemple un véhicule ferroviaire, notamment de type train à moyenne ou grande vitesse, ou un véhicule de transport urbain ou péri-urbain tel qu'un tramway ou un métro.

La description qui suit est faite en référence à une direction longitudinale X, une direction transversale Y et une direction d'élévation Z, représentées sur les figures. La direction longitudinale X s'étend selon la direction d'avancée du véhicule en fonctionnement normal. La direction d'élévation Z est orthogonale à la direction longitudinale X et s'étend selon une hauteur du véhicule. La direction transversale Y est orthogonale à la direction longitudinale X et à la direction d'élévation Z et s'étend selon la largeur du véhicule.

Par les termes « sensiblement parallèle », « sensiblement selon » et « sensiblement perpendiculaire », on entend respectivement « parallèle », « selon » et « perpendiculaire » avec une marge d'erreur angulaire inférieure ou égale à 10°, de préférence inférieure à 5°.

Par le terme « sensiblement égal », on entend « égal » avec une marge d'erreur inférieure ou égale à 10% de la valeur nominale, de préférence inférieure ou égale à 5%.

Le véhicule 10 comprend par exemple au moins une caisse 12 montée sur au moins un bogie 14.

Le bogie 14 comprend un châssis 15 portant des roues 16 montées sur des essieux 17. Par exemple, chaque bogie 14 comprend deux essieux 17 portant chacun deux roues 16 liées en rotation par l'essieu 17.

En variante (non représentée), le bogie 14 comprend quatre essieux 17 indépendants portant chacun une roue 16 respective, de sorte que les roues 16 sont indépendantes les unes des autres en rotation.

L'essieu 17 et chaque roue 16 portée par l'essieu 17 forment un dispositif tournant autour d'un axe de rotation s'étendant selon la direction transversale Y.

Le véhicule 10 comprend au moins un ensemble d'entraînement 18 dudit dispositif tournant, l'ensemble d'entrainement 18 comprenant un moteur électrique 20 et un système de transmission de couple 22 du moteur électrique 20 à l'essieu 17.

Le moteur électrique 20 et le système de transmission de couple 22 sont par exemple montés sur le châssis 15 du bogie 14.

En variante, le moteur électrique 20 est monté directement sur la caisse 12, ou alors monté sur le châssis 15 de manière suspendue. Dans ce cas, de manière connue, le système de transmission de couple 22 est configuré pour compenser d'éventuels débattements entre le moteur électrique 20 et l'essieu 17.

L'ensemble d'entraînement 18 est propre à générer un couple moteur et à le transmettre au dispositif tournant afin de le mettre en rotation.

Par exemple, la transmission du couple moteur est destinée à entraîner les roues 16 de manière à mettre en mouvement le véhicule ferroviaire 10.

De plus, l'ensemble d'entraînement 18 est configuré pour interrompre sur commande la transmission de couple, à la fois depuis l'ensemble d'entrainement 18 vers le dispositif tournant, ainsi qu'en retour du dispositif tournant vers l'ensemble d'entraînement 18.

Le moteur électrique 20 est propre à générer le couple moteur lorsqu'il est alimenté en énergie électrique.

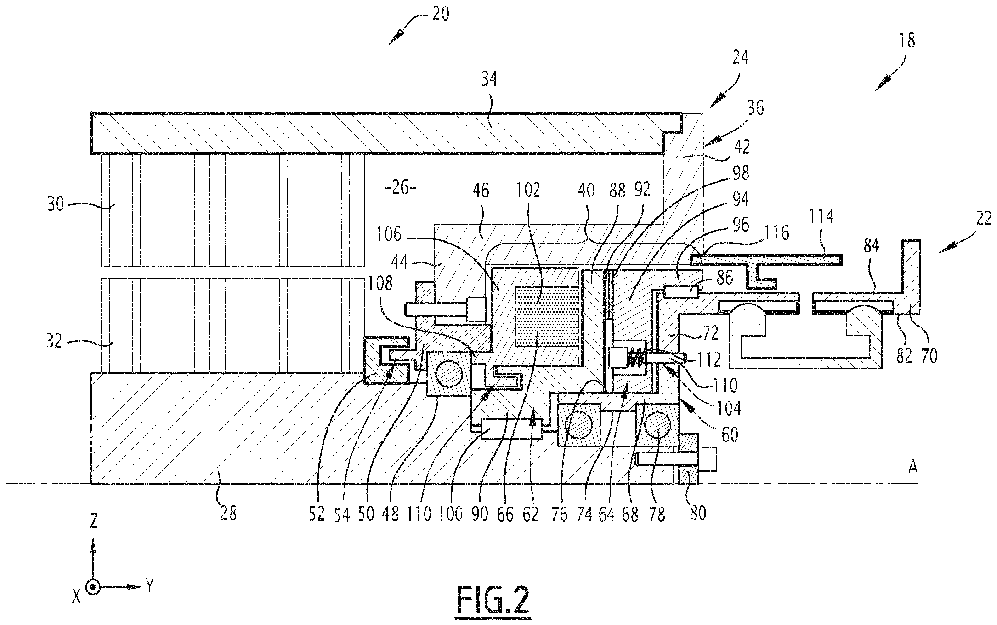

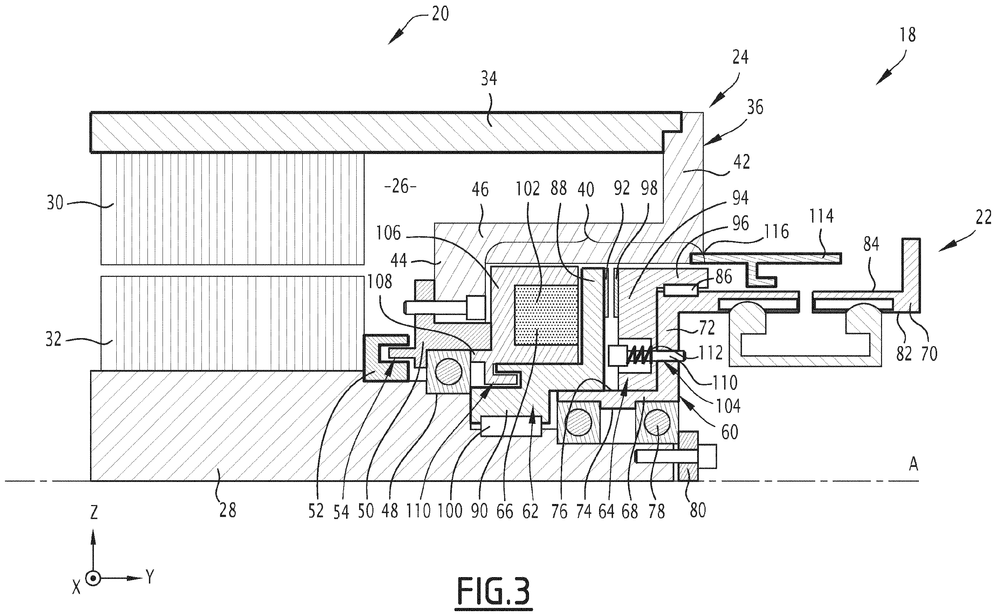

Le moteur électrique 20 est notamment un moteur à aimant permanents. Le moteur électrique 20, représenté plus en détail sur les figures 2 et 3, comprend un carter 24 de protection définissant un espace interne 26 et un arbre 28 s'étendant selon un axe A, monté mobile en rotation autour de l'axe A par rapport au carter 24.

L'axe A s'étend, dans l'exemple représenté, sensiblement selon la direction transversale Y, parallèlement à l'essieu 17.

En variante (non représentée), l'axe A s'étend sensiblement selon la direction longitudinale X, et le système d'entraînement 18 comprend un ensemble d'engrenages propres à transmettre le couple moteur au dispositif tournant sensiblement orthogonal à l'axe A.

Le moteur électrique 20 comprend également, disposés dans l'espace interne 26, un stator 30 fixe monté sur le carter 24 et un rotor 32 monté sur l'arbre 28, le rotor 32 étant agencé de manière classique en regard du stator 30.

Le carter 24 est par exemple une carcasse métallique assurant la protection mécanique du rotor 32 et du stator 30 et isolant l'espace interne 26 de l'extérieur, par exemple pour y empêcher la pénétration de poussières.

Le carter 24 comprend une paroi circonférentielle 34 formant une coque sensiblement cylindrique centrée sur l'axe A, ainsi qu'un premier flasque 36 d'extrémité et un deuxième flasque 38 d'extrémité, qui ferment la paroi circonférentielle 34 de part et d'autre du carter 24, relativement à l'axe A.

La paroi circonférentielle 34 s'étend sensiblement parallèlement à l'axe A, et est par exemple réalisée en acier. La paroi circonférentielle 34 maintient le stator 30 en place par serrage radial.

Le carter 24, comme représenté sur les figures 2 et 3, définit un logement 40 sensiblement cylindrique, qui s'étend autour de l'arbre 28. Le logement 40 est notamment défini dans le premier flasque 36 et s'ouvre vers l'extérieur du carter 24, selon la direction de l'axe A.

Plus particulièrement, le premier flasque 36 ferme la paroi circonférentielle 34 à une extrémité du carter 24, et ce premier flasque 36 comprend un disque externe 42 fixé à la paroi circonférentielle 34, ainsi qu'un disque interne 44 et une paroi cylindrique 46 interne reliant le disque externe 42 au disque interne 44. Le disque interne 44 est décalé selon l'axe A par rapport au disque externe 42, en direction de l'espace interne 26.

Le disque interne 44 et la paroi cylindrique interne 46 définissent entre eux le logement 40 sensiblement cylindrique autour de l'axe A.

La paroi cylindrique interne 46 s'étend de manière coaxiale avec la paroi circonférentielle 34 et présente un diamètre inférieur, de sorte que la paroi circonférentielle 34 entoure radialement le logement 40 et le protège mécaniquement.

Avantageusement, la paroi cylindrique interne 46 affleure sur le disque externe 42, de sorte que le logement 40 cylindrique débouche sur le disque externe 42 et est entouré par la paroi circonférentielle 34 dans son intégralité.

Avantageusement, le disque externe 42 s'étend sensiblement en regard de l'extrémité de l'arbre 28.

Le premier flasque 36 porte de plus un palier de roulement interne 48 sur lequel est monté l'arbre 28. Le palier de roulement interne 48 est fixé au disque interne 44 par une bride interne 50.

Avantageusement, la bride interne 50 présente des reliefs en chicanes qui coopèrent avec des reliefs en chicanes complémentaires d'une bague d'étanchéité interne 52 montée sur l'arbre 28, de manière à former un labyrinthe d'étanchéité interne 54.

Le deuxième flasque 38 est par exemple en forme de disque sensiblement plan, et porte un palier de roulement (non représenté) recevant l'autre extrémité de l'arbre 28.

Le système de transmission de couple 22 est agencé pour relier l'arbre 28 au dispositif tournant, de manière à transmettre le couple moteur de l'arbre 28 au dispositif tournant.

De plus, le système de transmission 22 est configuré pour prendre, sur commande, une configuration accouplée, représentée sur la figure 2, dans laquelle le système de transmission 22 transmet le couple de l'arbre 28 au dispositif tournoyant et du dispositif tournant à l'arbre 28, et une configuration désaccouplée, représentée sur la figure 3, dans laquelle le système de transmission 22 ne transmet aucun couple moteur.

Le système de transmission de couple 22 comprend un manchon 60 disposé autour de l'arbre 28, agencé pour entraîner le dispositif tournant, ainsi qu'un premier plateau 62 monté fixe sur l'arbre 28, un deuxième plateau 64 monté sur le manchon 60, et un système d'actionnement 66.

Le manchon 60 comprend une première partie 68 cylindrique, une deuxième partie 70 cylindrique et un disque de raccord 72 reliant la première partie 68 et la deuxième partie 70.

La première partie 68 du manchon 60 entoure radialement une extrémité de l'arbre 28 et présente une surface interne 74 faisant face à l'arbre 28 et une surface externe 76 opposée.

La première partie 68 est montée mobile en rotation par rapport à l'arbre 28 autour de l'axe (A) sur des paliers de roulement externes 78 disposés entre le manchon 60 et l'arbre 28, notamment entre la surface interne 74 et l'arbre 28.

Les paliers de roulement externes 78 sont maintenus en position par serrage entre des épaulements de la surface interne 74 de la première partie 68 du manchon 60 et respectivement un épaulement de l'arbre 28 et une bride d'extrémité 80 fixée sur l'arbre 28.

La surface externe 76 de la première partie 68 est en contact radial glissant avec le premier plateau 62 et avec le deuxième plateau 64. Le deuxième plateau 64 est coulissant sur la surface externe 76 en translation selon une direction parallèle à l'axe A.

La deuxième partie 70 présente une surface interne 82 et une surface externe 84, qui sont plus éloignées de l'axe A que les surfaces interne 74 et externe 76 de la première partie 68.

La surface externe 84 de la deuxième partie 70 présente des cannelures externes 86 sur lesquelles est monté le deuxième plateau 64. Ainsi, le deuxième plateau 64 est mobile en translation selon l'axe A par rapport au manchon 60, mais solidaire du manchon 60 en rotation autour de l'axe A.

Le premier plateau 62 comprend un premier disque 88 orthogonal à l'axe A, un rebord interne 90 entourant radialement l'arbre 28, et un premier organe d'embrayage 92.

Le deuxième plateau 64 comprend un deuxième disque 94 orthogonal à l'axe A, un rebord externe 96 entourant radialement le manchon 60, et un deuxième organe d'embrayage 98.

Le deuxième plateau 64 est mobile en translation par rapport au premier plateau 62, selon une direction parallèle à l'axe A, entre une position d'engagement, représentée sur la figure 2, dans laquelle le premier plateau 62 et le deuxième plateau 64 s'entraînent l'un l'autre en rotation autour de l'axe A, et une position de désengagement, représentée sur la figure 3, dans laquelle le premier plateau 62 et le deuxième plateau 64 sont libres l'un par rapport à l'autre en rotation autour de l'axe A.

Le premier disque 88 et le deuxième disque 94 s'étendent l'un en regard de l'autre selon la direction de l'axe A, et portent respectivement le premier organe d'embrayage 92 et le deuxième organe d'embrayage 98.

Le rebord interne 90 est monté sur des cannelures internes 100 solidaires de l'arbre 28, de sorte que le premier plateau 62 est solidaire de l'arbre 28 en rotation autour de l'axe A.

Le rebord externe 96 est monté sur les cannelures externes 86, de sorte que le deuxième plateau 64 est solidaire du manchon 60 en rotation autour de l'axe A.

Le premier organe d'embrayage 92 et le deuxième organe d'embrayage 98 s'étendent en regard l'un de l'autre et sont agencés pour coopérer lorsque le deuxième plateau 64 est dans sa position d'engagement, comme représenté sur la figure 2, de sorte que le premier plateau 62 et le deuxième plateau 64 sont solidaires en rotation dans la configuration accouplée.

Ainsi, dans la configuration accouplée, les couples de rotation autour de l'axe A sont transmis de l'arbre 28 au manchon 60 et vice-versa.

En configuration désaccouplée, représentée sur la figure 3, le premier organe d'embrayage 92 et le deuxième organe d'embrayage 98 sont à l'écart l'un de l'autre selon la direction de l'axe A, de sorte que le premier plateau 62 et le deuxième plateau 64 ne sont plus solidaires l'un avec l'autre en rotation autour de l'axe A.

Le premier organe d'embrayage 92 et le deuxième organe d'embrayage 98 sont par exemple des couronnes dentées complémentaires l'une de l'autre.

En variante, le premier organe d'embrayage 92 et le deuxième organe d'embrayage 98 sont des disques de friction et l'embrayage se fait par simple friction.

Le système d'actionnement 66 comprend un organe d'engagement 102 propre à déplacer le deuxième plateau 64 vers la position d'engagement et un organe de rappel 104 propre à déplacer le deuxième plateau 64 vers la position de désengagement.

L'organe d'engagement 102 est propre à solliciter le deuxième plateau 64 vers sa position d'engagement lorsqu'il est activé, notamment sur commande externe.

L'organe d'engagement 102 est par exemple un dispositif électromagnétique, notamment un solénoïde, propre à générer un champ électrique et/ou magnétique lorsqu'un courant électrique le traverse. Le champ électrique et/ou magnétique exerce alors une force d'engagement sur le deuxième plateau 64 de manière à déplacer le deuxième plateau 64 vers sa position d'engagement.

L'organe d'engagement 102 est porté par un support 106 fixé à la bride interne 50, le support 106 définissant une gorge annulaire de réception de l'organe d'engagement 102.

Avantageusement, le support 106 de l'organe d'engagement 102 forme une butée 108 contre le palier de roulement interne 48, de sorte que le palier de roulement interne 48 est maintenu axialement entre la bride interne 50 et le support 106.

Avantageusement, le support 106 et le premier plateau 62 définissent des reliefs en chicane complémentaires formant un labyrinthe d'étanchéité externe 110.

L'organe de rappel 104 est propre à solliciter le deuxième plateau 64 vers sa position de désengagement.

L'organe de rappel 104 est par exemple agencé pour exercer en permanence une force de rappel sur le deuxième plateau 64, orientée sensiblement parallèlement à l'axe A, de manière à déplacer le deuxième plateau 64 vers sa position de désengagement.

La force de rappel présente alors une valeur inférieure courante à une valeur de la force d'engagement lorsqu'elle est appliquée, de sorte que le deuxième plateau 64 est globalement sollicité vers la position d'engagement lorsque l'organe d'engagement 102 est activé, et globalement, sollicité vers sa position de désengagement lorsque l'organe d'engagement 102 n'est pas activé.

L'organe de rappel 104 comprend notamment une vis 110 fixée au manchon 60 par une extrémité et un ressort 112 comprimé entre le deuxième plateau 64 et une tête de la vis 110, agencé pour exercer une force mécanique orientée sensiblement parallèlement à l'axe A et sollicitant le deuxième plateau 64 vers le manchon 60.

Le premier plateau 62, le deuxième plateau 64 et le système d'actionnement 66 sont reçus dans le logement 40.

Par cela, on entend que le premier plateau 62, le deuxième plateau 64 et le système d'actionnement 66 sont entièrement contenus dans l'espace cylindrique du logement 40 et ne dépassent pas du premier flasque 36 selon la direction de l'axe A.

Le système de transmission 22 mettant en oeuvre des plateaux 62, 64 mobiles en translation l'un par rapport à l'autre le long de l'arbre 28 selon l'axe A présente une compacité et une robustesse avantageuses par rapport aux dispositifs précédents.

De plus, l'intégration des plateaux 62, 64 et du système d'actionnement 66 dans le logement 40 permet de réduire l'encombrement associé hors du carter 24, et de les protéger des chocs extérieurs.

De même, le ou chaque palier de roulement interne 48 et le ou chaque palier de roulement externe 78 sont reçus dans le logement 40, ce qui réduit encore l'encombrement et la vulnérabilité du système aux chocs.

Avantageusement, l'ensemble d'entraînement 18 comprend également un capot 114 de protection, sensiblement cylindrique autour de l'axe A, monté sur le carter 24. Le capot 114 fait saillie sensiblement parallèlement à l'axe A depuis des bords d'extrémités 116 du logement 40, et améliore encore la protection des plateaux 62, 64 et du système d'actionnement 66.

Le système de transmission de couple 22 décrit permet donc un accouplement et un désaccouplement du dispositif tournant et de l'arbre 28 réversibles et pilotés à distance, tout en présentant un encombrement réduit et une robustesse améliorée.

## Revendications

1. Ensemble d'entrainement (18) d'un dispositif tournant, comprenant :
- un moteur électrique (20) comprenant un carter (24) et un arbre (28) mobile en rotation autour d'un axe (A) par rapport au carter (24),
- un système de transmission de couple (22) agencé pour relier l'arbre (28) au dispositif tournant, le système de transmission (22) comprenant :
- un manchon (60) disposé autour de l'arbre (28), le manchon (60) étant destiné à entraîner le dispositif tournant en rotation,
- un premier plateau (62) monté fixe sur l'arbre (28),
- un deuxième plateau (64) monté sur le manchon (60),
- un système d'actionnement (66) du deuxième plateau (64) entre une position d'engagement et une position de désengagement,
**caractérisé en ce que** le deuxième plateau (64) est monté mobile en translation par rapport au premier plateau (62) selon une direction sensiblement parallèle à l'axe (A), entre la position d'engagement dans laquelle le premier plateau (62) et le deuxième plateau (64) sont solidarisés en rotation autour de l'axe (A), et la position de désengagement dans laquelle le premier plateau (62) et le deuxième plateau (64) sont libres l'un par rapport à l'autre en rotation autour de l'axe (A),
dans lequel le carter (24) comprend une paroi circonférentielle (34) s'étendant sensiblement parallèlement à l'axe (A) et au moins un premier flasque (36) d'extrémité fermant la paroi circonférentielle (34), le premier flasque (36) définissant un logement (40) sensiblement cylindrique autour de l'arbre (28), le premier plateau (62), le deuxième plateau (64) et le système d'actionnement (66) étant reçus dans le logement (40), la paroi circonférentielle (34) entourant radialement le logement (40) dans son intégralité.

2. Ensemble d'entraînement (18) selon la revendication 1, dans lequel le système d'actionnement (66) comprend un organe d'engagement (102) propre à solliciter le deuxième plateau (64) vers sa position d'engagement lorsqu'il est activé, notamment sur commande externe.

3. Ensemble d'entraînement (18) selon la revendication 2, dans lequel l'organe d'engagement (102) comprend un solénoïde agencé pour générer un champ électrique et/ou magnétique lorsqu'il est activé, le champ électrique et/ou magnétique exerçant une force d'engagement sur le deuxième plateau (64) sollicitant le deuxième plateau vers sa position d'engagement.

4. Ensemble d'entraînement (18) selon l'une quelconque des revendications 1 à 3, dans lequel le premier plateau (62) et le deuxième plateau (64) comprennent respectivement un premier organe d'embrayage (92) et un deuxième organe d'embrayage (98) s'étendant en regard l'un de l'autre, agencés pour coopérer l'un avec l'autre lorsque le deuxième plateau (64) est en position d'engagement.

5. Ensemble d'entraînement (18) selon l'une quelconque des revendications 1 à 3, dans lequel le premier plateau (62) et le deuxième plateau (64) sont agencés pour coopérer l'un avec l'autre par friction lorsque le deuxième plateau (64) est en position d'engagement.

6. Ensemble d'entraînement (18) selon l'une quelconque des revendications 1 à 5, dans lequel le manchon (60) comprend une surface externe (84) périphérique comportant des cannelures externes (86) réparties autour de l'axe (A), le deuxième plateau (64) étant monté sur les cannelures externes (86) de manière mobile en translation selon une direction parallèle à l'axe (A).

7. Ensemble d'entraînement (18) selon l'une quelconque des revendications 1 à 6, dans lequel l'ensemble d'entraînement (18) comprend un capot de protection sensiblement cylindrique monté sur le carter, le capot faisant saillie sensiblement parallèlement à l'axe (A) depuis des bords d'extrémités du logement.

8. Véhicule (10), notamment ferroviaire, comprenant un ensemble d'entrainement (18) selon l'une quelconque des revendications 1 à 7, ainsi qu'un dispositif tournant, le manchon étant fixé au dispositif tournant.

9. Véhicule (10) selon la revendication 8, dans lequel le dispositif tournant comprend au moins une roue du véhicule, l'ensemble d'entraînement comprenant avantageusement un réducteur comprenant le manchon.

## Patentansprüche

1. Antriebsanordnung (18) einer sich drehenden Vorrichtung, umfassend:
- einen Elektromotor (20) mit einem Gehäuse (24) und einer Welle (28), die um eine Achse (A) relativ zum Gehäuse (24) beweglich ist,
- ein Drehmomentübertragungssystem (22), das dazu angeordnet ist, die Welle (28) mit der sich drehenden Vorrichtung zu verbinden, wobei das Übertragungssystem (22) umfasst:
- eine um die Welle (28) angeordnete Hülse (60), wobei die Hülse (60) dazu bestimmt ist, die sich drehende Vorrichtung in Rotation zu versetzen,
- eine erste Platte (62), die fest an der Welle (28) montiert ist,
- eine zweite Platte (64), die an der Hülse (60) montiert ist,
- ein Betätigungssystem (66) der zweiten Platte (64) zwischen einer Eingriffsstellung und einer Ausrückstellung,
**dadurch gekennzeichnet, dass** die zweite Platte (64) in einer Richtung, die im Wesentlichen parallel zur Achse (A) verläuft, in Bezug auf die erste Platte (62) translatorisch beweglich montiert ist, zwischen der Eingriffsstellung, in der die erste Platte (62) und die zweite Platte (64) um die Achse (A) drehfest miteinander verbunden sind, und der Ausrückstellung, in der die erste Platte (62) und die zweite Platte (64) um die Achse (A) drehbar zueinander sind,
wobei das Gehäuse (24) eine im Wesentlichen parallel zur Achse (A) verlaufende Umfangswand (34) und wenigstens einen ersten Endflansch (36) aufweist, der die Umfangswand (34) verschließt, wobei der erste Flansch (36) eine im Wesentlichen zylindrische Aufnahme (40) um die Welle (28) herum bildet, wobei die erste Platte (62), die zweite Platte (64) und das Betätigungssystem (66) in der Aufnahme (40) aufgenommen sind, wobei die Umfangswand (34) die Aufnahme (40) in seiner Gesamtheit radial umgibt.

2. Antriebsanordnung (18) nach Anspruch 1, wobei das Betätigungssystem (66) ein Eingriffselement (102) umfasst, das die zweite Platte (64) bei Aktivierung, insbesondere auf externe Steuerung, in ihre Eingriffsstellung zwingen kann.

3. Antriebsanordnung (18) nach Anspruch 2, wobei das Eingriffselement (102) einen Elektromagneten umfasst, der dazu angeordnet ist, bei Aktivierung ein elektrisches und/oder magnetisches Feld zu erzeugen, wobei das elektrische und/oder magnetische Feld eine Eingriffskraft auf die zweite Platte (64) ausübt, die die zweite Platte in ihre Eingriffsstellung zwingt.

4. Antriebsanordnung (18) nach einem der Ansprüche 1 bis 3, wobei die erste Platte (62) und die zweite Platte (64) jeweils ein erstes Kupplungselement (92) und ein zweites Kupplungselement (98) umfassen, die sich einander gegenüberliegend erstrecken und die dazu angeordnet sind, miteinander zusammenzuwirken, wenn die zweite Platte (64) in der Eingriffsstellung ist.

5. Antriebsanordnung (18) nach einem der Ansprüche 1 bis 3, wobei die erste Platte (62) und die zweite Platte (64) dazu angeordnet sind, ineinander zu greifen, wenn die zweite Platte (64) in der Eingriffsstellung ist.

6. Antriebsanordnung (18) nach einem der Ansprüche 1 bis 5, wobei die Hülse (60) eine umlaufende Außenfläche (84) mit um die Achse (A) herum verteilten Außenrillen (86) aufweist, wobei die zweite Platte (64) an den Außenrillen (86) in einer Richtung parallel zur Achse (A) verschiebbar gelagert ist.

7. Antriebsanordnung (18) nach einem der Ansprüche 1 bis 6, wobei die Antriebsanordnung (18) eine im Wesentlichen zylindrische Schutzhaube umfasst, die an dem Gehäuse angebracht ist, wobei die Haube im Wesentlichen parallel zur Achse (A) von den Endkanten des Gehäuses vorsteht.

8. Fahrzeug (10), insbesondere Schienenfahrzeug, mit einer Antriebsanordnung (18) nach einem der Ansprüche 1 bis 7 sowie einer Drehvorrichtung, wobei die Hülse an der Drehvorrichtung befestigt ist.

9. Fahrzeug (10) nach Anspruch 8, wobei die Drehvorrichtung wenigstens ein Rad des Fahrzeugs umfasst und die Antriebsanordnung vorteilhafterweise ein die Hülse umfassendes Untersetzungsgetriebe umfasst.

## Claims

1. Drive assembly (18) for a rotating device, comprising:
- an electric motor (20) comprising a casing (24) and a shaft (28) movable in rotation about an axis (A) relative to the casing (24),
- a torque transmission system (22) arranged to connect the shaft (28) to the rotating device, the transmission system (22) comprising:
- a sleeve (60) disposed around the shaft (28), the sleeve (60) being intended to drive the rotating device in rotation,
- a first plate (62) fixedly mounted on the shaft (28),
- a second plate (64) mounted on the sleeve (60),
- a system (66) for actuating the second plate (64) between an engagement position and a disengagement position,
**characterised in that** the second plate (64) is mounted movable in translation relative to the first plate (62) according to a direction substantially parallel to the axis (A), between the engagement position in which the first plate (62) and the second plate (64) are rotatably secured about the axis (A), and the disengagement position in which the first plate (62) and the second plate (64) are rotatably free relative to one another about the axis (A),
wherein the casing (24) comprises a circumferential wall (34) extending substantially parallel to the axis (A) and at least one end flange (36) closing the circumferential wall (34), the first flange (36) defining a substantially cylindrical housing (40) around the shaft (28), the first plate (62), the second plate (64) and the actuation system (66) being received in the housing (40), the circumferential wall (34) radially surrounding the housing (40) entirely.

2. Drive assembly (18) according to claim 1, wherein the actuation system (66) comprises an engagement member (102) capable of engaging the second plate (64) towards the engagement position thereof when it is activated, in particular by external control.

3. Drive assembly (18) according to claim 2, wherein the engagement member (102) comprises a solenoid arranged to generate an electric and/or magnetic field when activated, the electric and/or magnetic field exerting an engagement force on the second plate (64) engaging the second plate towards the engagement position thereof.

4. Drive assembly (18) according to any one of claims 1 to 3, wherein the first plate (62) and the second plate (64) respectively comprise a first clutch member (92) and a second clutch member (98) extending facing one another, arranged to cooperate with one another when the second plate (64) is in the engagement position.

5. Drive assembly (18) according to any one of claims 1 to 3, wherein the first plate (62) and the second plate (64) are arranged to cooperate with one another by friction when the second plate (64) is in the engagement position.

6. Drive assembly (18) according to any one of claims 1 to 5, wherein the sleeve (60) comprises a peripheral outer surface (84) comprising outer splines (86) distributed about the axis (A), the second plate (64) being mounted on the outer splines (86) movable in translation according to a direction parallel to the axis (A).

7. Drive assembly (18) according to any one of claims 1 to 6, wherein the drive assembly (18) comprises a substantially cylindrical protective cover mounted on the casing, the cover protruding substantially parallel to the axis (A) from end edges of the housing.

8. Vehicle (10), in particular railway, comprising a drive assembly (18) according to any one of claims 1 to 7, as well as a rotating device, the sleeve being attached to the rotating device.

9. Vehicle (10) according to claim 8, wherein the rotating device comprises at least one wheel of the vehicle, the drive assembly advantageously comprising a reducer comprising the sleeve.
